# EUROPEAN PATENT APPLICATION

(11) **EP 4 386 243 A1**
(43) Date of publication of application: **19.06.2024**
(21) Application number: 22854813.7
(22) Date of filing: 06.07.2022
(51) Int. Cl.: F16L 1/12, F16L 1/20, F16L 1/18, F16L 1/235, F16L 1/26, B63B 35/03, B63G 8/42, B63G 8/14, E21B 17/01

(54) **SUBMARINE REEL DRIVE SYSTEM AND METHOD FOR REELING IN AND LAUNCHING FLEXIBLE PIPES AND UMBILICALS**

(30) Priority: 10.08.2021 BR 102021015706
(71) Applicant: Petroleo Brasileiro S.A. - PETROBRAS, 20031912 Rio de Janeiro (BR)
(72) Inventor: TAVARES, Gabriel Maial, 27920-325 Macaé, RJ (BR); FERREIRA, Claudio Violante, 20510-150 Rio de Janeiro, RJ (BR); DE LIMA, Ubirajara Alvarenga, 27930-860 Macaé, RJ (BR)
(74) Representative: Clarke, Modet y Cía., S.L.
(86) International application number: PCT/BR2022/050251
(87) International publication number: WO 2023/015369

(57) **Abstract**

The present invention consists of a launching method consisting of lowering a reel drive system, suitably marinized, to a fixed distance from the seabed, close to 50 m (enough to avoid colliding with obstacles and subsea systems), thus minimizing the catenary formed during the launch or recovery.

The proposed equipment is capable of rotating standard reels containing flexible pipes and umbilicals, with rotation and torque control, as well as control of the flexible ends (through an auxiliary winch system), designed so that the entire system can be lifted by winches from a vessel and lowered to a working depth, close to the seabed.

## Description

### Field of the Invention

The present invention is based on the development of a system and method for launching and recovering subsea flexible lines.

### Description of the State of the Art

PLSVs typically launch pipes directly from the sea surface, forming long catenaries, involving the entire water depth in the field. When launching occurs in shallow water depths, this is not normally a restriction; however, as there is an advance to deeper water depths, the flexible pipe design becomes limited in terms of its materials, and the ability to support its own weight in catenary (which in the Pre-Salt, for example, is of order of 2500 m).

As the strength of the used steels increases, the susceptibility to certain failure mechanisms increases, as is the case with SCC-CO2 (CO₂ Stress Corrosion). By reducing strength, to minimize the impact of this mechanism, the weight and number of structural layers required are increased, thereby increasing the cost of the flexible pipe, up to the limit where it is no longer possible to meet the technical criteria.

In demobilization projects in which the documentation of the flexible pipe is no longer valid (it has exceeded its design useful life), does not exist in the system, or the flexible pipe is known to be in a state of structural degradation, making it not viable or safe to recovery the same, since it may not resist the tension generated by its own weight, the existing solution in this case being, with the aid of a ROV, cutting the pipe into small sections (around 30 m each) and recover them individually by crane. This is a long and costly operation in relation to vessel time, compared to the conventional operation.

The object of the invention is an innovation in a flexible pipe subsea launch system. The proposed equipment would be capable of rotating standard dimension reels containing flexible pipes and umbilicals, with rotation and torque control, as well as control of the flexible ends (through an auxiliary winch system), designed so that the entire system can be lifted by winches from a vessel and lowered to a working depth, close to the seabed. From there, the launch begins, with the exclusive ROV support, forming an extremely reduced catenary (50 m or less).

In Pre-Salt fields, the invention allows for more appropriate choices of materials to resist typical failure mechanisms, such as SCC-CO2 and internal slipping of structures, as it eliminates the need to resist large tensile stresses. This brings significant gains in increasing the useful life of the involved structures, as well as minimizing the manufacturing (and possibly purchasing) costs of these same structures. The invention system aims at making designs that are currently unfeasible from a technical-economic point of view viable.

In operations with degraded pipes (mainly decommissioning), the invention provides an alternative that allows the handling of these pipes safely without considering the state of integrity, since the pipe will be reeled on a reel, and the reel will provide the structural support for the pipe during lifting. Operational risks related to the rupture of the catenary or loss of tightness are minimized, including environmental risks (in case of loss of tightness, there may be a leak of oil or radioactive waste - NORM).

In operations with pipes without connectors (cut pipes), a problematic situation for PLSVs, the invention eliminates the need for special equipment, as for low catenaries the load will be equally low, enabling the use of simple mooring equipment based on friction, such as Chinese finger, and other equipment, such as clamps, commercially available. The recovery itself would be identical to the others.

Document WO2013172706A1 discloses a method for launching subsea pipelines. The method comprises the steps of constructing a section of pipeline by joining two smaller sections, positioning the constructed section of the pipeline on a subsea storage surface, and recovering the section of the pipeline from the sea by reeling the same onto the ship reel.

Document WO2014209129A1 discloses a semi-submersible platform for launching subsea flexible pipes and a method for launching.

Document US8608406B2 discloses a reeled pipe storage reel with a large diameter hollow cylindrical shaft, reel shaft bearing support structures installed on the vessel, and a reel drive arrangement mounted on the vessel.

The documents of the State of the Art depart from the present invention by not disclosing a method for launching or recovering subsea flexible pipes wherein a reel is launched by a winch to a certain depth of the seabed, so that said reel rotates to reel or unreel the subsea pipeline, recovering the same from the seabed or launching the same to the seabed.

### Objective of the Invention

It is an objective of the invention to allow the simplification of flexible structures, enabling the use of simpler structures in relation to strength and cost, and the use of CRA materials more suitable for aggressiveness of the produced fluid.

It is further an objective of the invention to enable the recovery of degraded structures, by minimizing the loads acting on these structures.

It is further an objective of the invention to allow a reduction in the dimensioning of end-fittings, thus allowing the reeling of connected sections.

### Brief Description of the Invention

In order to achieve the objectives described above, the present invention comprises a launching method consisting of lowering a reel drive system, suitably marinized, to a fixed distance from the seabed, close to 50 m (enough to avoid colliding with obstacles and subsea systems), thus minimizing the catenary formed during the launch or recovery.

The proposed equipment is capable of rotating standard reels containing flexible pipes and umbilicals, with rotation and torque control, as well as control of the flexible ends (through an auxiliary winch system), designed so that the entire system can be lifted by winches from a vessel and lowered to a working depth, close to the seabed. From there, the launch begins, with the exclusive ROV support, forming an extremely reduced catenary (50 m or less).

### Brief Description of the Drawings

The present invention will be described in more detail below, with reference to the attached figures which, in a schematic way and not limiting the inventive scope, represent examples of embodiment thereof. In the drawings, there are:

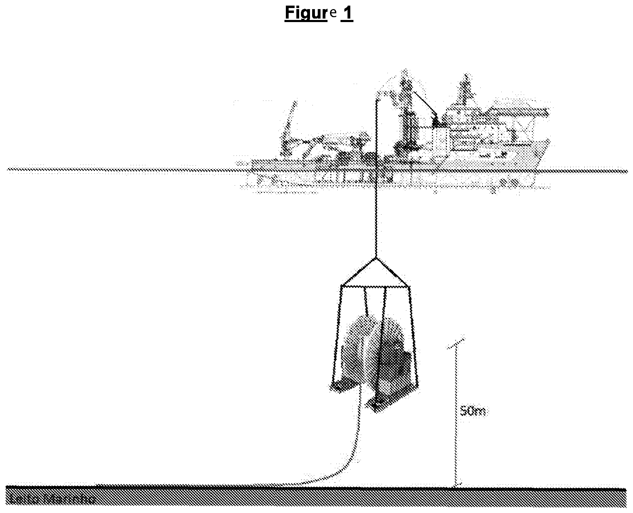

1. Figure 1, which schematically illustrates the Subsea Reel Drive method for recovering and launching pipes and umbilicals proposed in this invention;

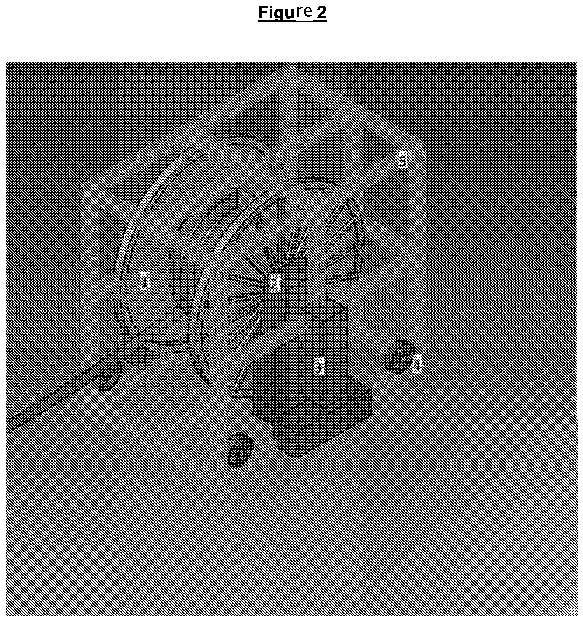

2. Figure 2, which illustrates details of the invention system, namely: reel (1), motorization and torque transmission system (drive) (2), floaters (3), thrusters for dynamic positioning (4), structure to support the system (lifting eyes and cabling are hidden) (5).

### Detailed Description of the Invention

There follows below a detailed description of a preferred embodiment of the present invention, which is exemplary and in no way limiting. Nevertheless, it will be clear to a technician skilled on the subject, from reading this description, possible additional embodiments of the present invention still comprised by the essential and optional features below.

The present invention completely replaces PLSVs for the subsea interconnection processes, including risers, in the case where these can be pre-launched, as it allows pre-launch and, subsequently, end fishing and pull-in. The necessary vessel structure could easily include mechanisms to also demobilize by cable subsea equipment, as SESV operates, increasing the portfolio of services that the same vessel would provide. This vessel would naturally be less complex than a conventional PLSV, which could indicate a reduction in the daily rate.

The need for conventional PLSVs is still present for riser launches in case of first end pull-in, or in case of launches and recoveries with floaters, as these two scenarios require the dynamic launch of vertical sections, which would not be supported by the Subsea Reel Drive system. However, with the present invention, a large part of the problems identified for demobilization services is eliminated, which currently do not have a solution that meets all the necessary prerequisites.

The launch system of the invention consists of marinizing the reel of the Reel Drive system, including floaters to maintain the weight of the system (without pipes) neutral, and motors (thrusters), as well as a position control system similar to a DP (Dynamic Positioning), to allow its subsea operation. The equipment is capable of replacing the launch tower, which is a large and extremely expensive piece of equipment, with numerous benefits.

On a vessel with a moonpool located in a central position, the entire system would lower down to the working depth supported on its 4 vertices by winch cables (or equivalent) coming from the platform.

The proposed system has floaters, to maintain the weight of the equipment as neutral, or close to it, and minimize the load on the winch cables. The system lowers to a distance of 20 to 50 m from the seabed, where its positioning is maintained and controlled by a DP system, based on positioning sensors, in a way equivalent to that currently found in conventional ROVs. Along with the winch cables, an umbilical lowers down, which provides the equipment with (hydraulic and electrical) power from the vessel, in order to power the equipment motors and sensors. One (or more) ROV is used to help anchor the end of the flexible pipe to be launched on the seabed, possibly using dead weight, which may be previously installed on the reel or anchoring system. From that moment on, with the end anchored, the launch or recovery begins, by driving the reeling device, rotating the reel and unreeling or reeling the flexible pipe. The launch is controlled directly from the vessel, like an ROV, and maintained on track by the positioning system, with visual control by cameras. After exhausting the reel, the equipment is lifted, and the reel is replaced by another reel stored on the ship, allowing the process to continue.

The invention proposed herein brings great gains and advantages to the procedure for launching and recovering flexible lines. It eliminates direct personnel contact with tensile stressed pipes, practically completely solving the safety hazards associated with the launch or recovery process. It also eliminates the need for the launch tower, which is considered the greatest risk of PLSVs (falling objects, operation under load). It eliminates technical obstacles due to material limits in the design of subsea pipes for the Pre-Salt, since there is no need to use rigid cladded pipes in the Pre-Salt, an item with low manufacturing costs.

With the present invention it is possible to recover degraded pipes, even minimizing the leakage of oil/oily water during the recovery, as the pipe is recovered in a reel, which restricts the flow (forms siphons) and not in a catenary with open ends, or in pieces, after successive cuts.

The invention further brings economic gains, minimizing the daily rate of the vessel, replacing PLSVs with vessels with less need for personnel on board and less equipment on deck. It optimizes the flexible pipes used for the Pre-Salt, potentially reducing their cost and the number of interventions required throughout their useful life. It makes the recovery of degraded pipes in demobilization projects economically viable. It significantly speeds up degraded pipe recovery operations, by eliminating the need for successive cuts with ROV. It promotes a significant reduction in the cost associated with the acquisition of flowline flexible pipes (as they no longer need to be sized to support installation loads).

## Claims

1. A SUBSEA SYSTEM FOR RECOVERING AND LAUNCHING FLEXIBLE PIPES AND UMBILICALS, **characterized in that** it comprises a marinized reel (1), a motorization and torque transmission system (drive) (2), at least one floater (3), at least one motor (thruster) (4), a structure to support the system (5), a DP (Dynamic Positioning) system, and positioning sensors.

2. THE SUBSEA SYSTEM FOR RECOVERING AND LAUNCHING FLEXIBLE PIPES AND UMBILICALS according to claim 1, **characterized in that** the floater (3) maintains the weight of the system (without pipes) neutral.

3. THE SUBSEA SYSTEM FOR RECOVERING AND LAUNCHING FLEXIBLE PIPES AND UMBILICALS according to claim 1, **characterized in that** it has visual control by cameras for launching or recovering.

4. A METHOD FOR RECOVERING AND LAUNCHING FLEXIBLE PIPES AND UMBILICALS, using the system as defined in claim 1, **characterized in that** it comprises the following steps:
a. Lowering the system to a working depth;
b. Lowering an umbilical to provide the equipment with (hydraulic and electrical) power from the vessel;
c. Anchoring the end of the flexible pipe to the seabed;
d. Driving the reeling device;
e. Launching or recovering the flexible pipe;
f. After exhausting the reel, lifting the same;
g. Replacing with another reel.

5. THE METHOD FOR RECOVERING AND LAUNCHING FLEXIBLE PIPES AND UMBILICALS according to claim 4, **characterized in that**, in step a), the system lowers supported at its 4 vertices by winch cables (or equivalent) coming from the platform.

6. THE METHOD FOR RECOVERING AND LAUNCHING FLEXIBLE PIPES AND UMBILICALS according to claim 4, **characterized in that**, in step a), the system lowers to a distance of 20 to 50 m from the seabed.

7. THE METHOD FOR RECOVERING AND LAUNCHING FLEXIBLE PIPES AND UMBILICALS according to claim 4, **characterized in that** the lowering control and positioning are carried out by a DP system.

8. THE METHOD FOR RECOVERING AND LAUNCHING FLEXIBLE PIPES AND UMBILICALS according to claim 4, **characterized in that** the launch or recovery operation is controlled directly from the vessel and maintained on track by the dynamic positioning (DP) system.
